# EUROPÄISCHE PATENTSCHRIFT

(11) **EP 2 651 608 B1**
(45) Veröffentlichungstag und Bekanntmachung des Hinweises auf die Patenterteilung: **08.02.2023**
(21) Anmeldenummer: 11808609.9
(22) Anmeldetag: 09.12.2011
(51) Int. Cl.: B25J 9/16, B25J 13/08, B25J 19/06

(54) **VERFAHREN ZUM BETREIBEN EINER SICHERUNGSEINRICHTUNG FÜR EINE HANDHABUNGSVORRICHTUNG, UND HANDHABUNGSVORRICHTUNG**
METHOD FOR OPERATING A SAFETY APPARATUS FOR A HANDLING DEVICE, AND HANDLING DEVICE
PROCÉDÉ POUR FONCTIONNEMENT DE DISPOSITIF DE SÉCURITÉ POUR UN DISPOSITIF DE MANIPULATION, ET DISPOSITIF DE MANIPULATION

(30) Priorität: 16.12.2010 DE 102010063208
(43) Veröffentlichungstag der Anmeldung: 23.10.2013
(73) Patentinhaber: Robert Bosch GmbH, 70442 Stuttgart (DE)
(72) Erfinder: SCHLAICH, Peter, 71229 Leonberg (DE); ROETHLING, Frank, 33649 Bielefeld (DE)
(86) Internationale Anmeldenummer: PCT/EP2011/072330
(87) Internationale Veröffentlichungsnummer: WO 2012/080123

(56) Entgegenhaltungen:
- EP-A1- 0 158 593
- EP-A1- 0 518 836
- EP-A2- 1 323 503
- WO-A1-2010/063319
- DE-A1-102008 063 081
- FR-A1- 2 663 105
- JP-A- H11 226 889

## Beschreibung

### Stand der Technik

Die Erfindung betrifft ein Verfahren zum Betreiben einer Sicherungseinrichtung für eine Handhabungsvorrichtung nach dem Oberbegriff des Anspruchs 1. Ferner betrifft die Erfindung eine Sicherungseinrichtung für eine Handhabungsvorrichtung sowie eine Handhabungsvorrichtung.

Ein derartiges Verfahren zum Betreiben einer Sicherungseinrichtung für eine Handhabungsvorrichtung ist bereits aus der DE 10 2007 062 245 A1 bekannt. Hierbei weist die Sicherungseinrichtung eine die Handhabungsvorrichtung umgebende Hülle in Form eines befüllbaren Mediumspeichers auf, der in Wirkverbindung mit einem Drucksensor angeordnet ist. Beim Erkennen einer Kollision spricht der Drucksensor an, worauf der Greifarm abgestoppt bzw. in eine entgegengesetzte Richtung bewegt wird. Da die Sicherungseinrichtung erst dann anspricht, wenn bereits eine Berührung bzw. Kollision mit einem Objekt, beispielsweise einem Gegenstand oder einer Person, stattgefunden hat, muss die erforderliche Bewegungsänderung bzw. das Abstoppen in extrem kurzer Zeit erfolgen, damit Beschädigungen bzw. Verletzungen vermieden werden. Daher ist es üblich, beim Erkennen einer derartigen Kollision einen "Notstopp" der Handhabungsvorrichtung bzw. des Greifarms durchzuführen. Ein derartiger "Notstopp" hat jedoch den Nachteil, dass die Bewegungsgeschwindigkeit nicht gesteuert auf den Wert Null heruntergefahren wird. Dadurch muss beispielsweise nach der Beseitigung der Kollisionsgefahr der Greifarm wieder in eine bestimmte Stellung gebracht werden, von der aus ein vorbestimmter Bewegungsablauf möglich ist bzw. es muß das Steuerungsprogrmm mit der Greifarmbewegung neu synchronisiert werden.

Weiterhin ist es aus der EP 1 323 503 A2 bekannt, ein mehrstufiges Sensorsystem vorzusehen, um einen gefährdungsfreien Betrieb der Handhabungsvorrichtung mit menschlicher Interaktion zu ermöglichen. Dabei basiert das Verfahren auf taktilen Funktionsprinzipien, obwohl als ein mögliches Sensorprinzip ein kapazitives Sensorprinzip beschrieben wird. Dabei hat das kapazitive Sensorprinzip jedoch nur eine ergänzende Funktion, kann also nur mit weiteren Sicherheitsmechanismen, wie einem Schaumstoffmantel oder einer taktiler Sensorik eingesetzt werden. Ein gezieltes, kollisionsfreies Abbremsen ist somit nicht vorgesehen. Daher dient bei der zuletzt genannten Sicherheitseinrichtung ein die Handhabungsvorrichtung umgebender Schaumstoffmantel insbesondere auch der Dämpfung bzw. Absorption der bei der Kollision entstehenden Aufprallenergie. Die DE 10 2008 063 081 A1 offenbart eine Sicherungsvorrichtung und ein Verfahren zum Betreiben einer mehrgliedrigen Maschine.

Die WO10063319A1 offenbart ein Robotersicherheitssystem, dass Menschen in der Nähe eines Arbeitsroboters vor schädlichen Kollisionen mit dem Roboter schützen soll.

### Offenbarung der Erfindung

Ausgehend von dem dargestellten Stand der Technik liegt der Erfindung die Aufgabe zugrunde, ein Verfahren zum Betreiben einer Sicherungseinrichtung für eine Handhabungsvorrichtung, insbesondere einen Industrieroboter derart weiterzubilden, dass zum einen eine vereinfachte Wiederinbetriebnahme bzw. ein Weiterbetrieb der Handhabungsvorrichtung möglich ist, wenn die Kollisionsgefahr nicht mehr besteht zum anderen bei Ausfall oder Nichtwirken von Teilen der Sicherungseinrichtung ein Schutz von Personen weiterhin sichergestellt ist. Diese Aufgabe wird bei einem Verfahren zum Betreiben einer Sicherungseinrichtung für eine Handhabungsvorrichtung mit den Merkmalen des Anspruchs 1 gelöst. Der Erfindung liegt dabei die Idee zugrunde, beim Erkennen einer Kollisionsgefahr einen geänderten Bewegungsablauf des Greifarms vorzusehen, wobei der geänderte Bewegungsablauf eine gesteuerte Reduzierung der Bewegungsgeschwindigkeit des Greifarms ist. Mit anderen Worten gesagt bedeutet dies, dass, im Gegensatz zum Stand der Technik, kein "Notaus"-Betrieb stattfindet, sondern eine gesteuerte Herabsetzung der Bewegungsgeschwindigkeit, wobei diese den Vorteil hat, dass dabei die jeweils aktuelle Position des Greifarms sicher erkannt wird, so dass entweder ein Weiterbetrieb der Handhabungsvorrichtung mit gegebenenfalls reduzierter Bewegungsgeschwindigkeit des Greifarms, oder aber ein Abstoppen des Greifarms bis zum Stillstand erfolgt, wobei die Stillstandposition des Greifarms sicher erkannt wird, so dass bei der Wiederinbetriebnahme ein direktes Anfahren aus dieser Position möglich ist.

Um eine besonderes sichere Erkennung möglicher Kollisionen zu gewährleisten, wird vorgeschlagen, dass die Signale von mehreren Sensorelementen verarbeitet werden, wobei zumindest zwei der Sensorelemente denselben Erfassungsbereich aufweisen. Das bedeutet, dass die verschiedenen Signale miteinander verglichen werden können, so dass selbst beim Ausfall eines Sensorelements die Steuereinrichtung beispielsweise weiterhin eine mögliche Kollisionsgefahr erkennen und entsprechend reagieren kann.

Vorteilhafte Weiterbildungen des erfindungsgemäßen Verfahrens zum Betreiben einer Sicherungseinrichtung für eine Handhabungsvorrichtung, insbesondere einen Industrieroboter, sind in den Unteransprüchen angegeben.

In einer ersten Ausgestaltung der Erfindung ist es vorgesehen, dass die Reduktion der Bewegungsgeschwindigkeit bis auf den Stillstand der Greifeinrichtung erfolgt. Dadurch wird insbesondere für den Fall, dass es sich bei dem Objekt um eine menschliche Person handelt, ein für die Person leicht erfassbares Bewegungsmuster des Greifarms erzielt.

Besonders bevorzugt ist eine Ausführungsform, bei der die Reduktion der Bewegungsgeschwindigkeit in Abhängigkeit der jeweils erfassten Entfernung des Objekts vom Bewegungsweg der Greifeinrichtung erfolgt. Mit anderen Worten gesagt bedeutet dies, dass zum einen der Betrieb der Handhabungsvorrichtung selbst bei Annäherung eines Objektes (mit reduzierter Geschwindigkeit) weitergeht, wodurch die Produktivität der Handhabungsvorrichtung nur relativ gering beeinflusst wird, und dass es zum anderen dadurch ermöglicht wird, stets eine aktuelle Bewegungsgeschwindigkeit der Greifeinrichtung vorzusehen, aus der mit Blick auf den aktuellen Abstand zwischen der Greifeinrichtung und dem Objekt ein sicheres Anhalten der Greifeinrichtung ohne die Gefahr einer Kollision mit dem Objekt ermöglicht wird.

Besonders bevorzugt ist es weiterhin, dass nach einer Reduktion der Bewegungsgeschwindigkeit die Bewegungsgeschwindigkeit der Greifeinrichtung der erfassten Entfernung vom Objekt flexibel angepasst, d.h. gegebenenfalls wieder bis auf eine ursprüngliche Soll-Bewegungsgeschwindigkeit erhöht wird. Dadurch wird die Leistung der Handhabungsvorrichtung optimiert, d.h., dass diese für den Fall, dass eine Kollisionsgefahr mit dem Objekt nicht mehr besteht, wieder ihre ursprüngliche Bewegungsgeschwindigkeit einnimmt und somit auch wieder die ursprüngliche Leistung leistet.

Weiterhin kann es vorgesehen sein, dass die Signale von mehreren Sensorelementen verarbeitet werden, wobei zumindest zwei der Sensorelemente mit unterschiedlichen Messprinzipien arbeiten. Dadurch wird insbesondere auch bei wechselnden Umweltbedingungen ein stets sicherer Betrieb der Sicherungseinrichtung ermöglicht.

In einer weiteren Ausgestaltung der Erfindung ist es vorgesehen, dass die Änderung der Bewegungsgeschwindigkeit der Greifeinrichtung in Abhängigkeit von der Annäherungsgeschwindigkeit zwischen der Greifeinrichtung und dem Objekt gesteuert wird. Das bedeutet, dass bei einer relativ hohen Annäherungsgeschwindigkeit auch ein relativ schnelles bzw. abruptes Abbremsen der Greifeinrichtung erfolgt, um eine mögliche Kollision zu vermeiden. Demgegenüber wird bei einer relativ geringen Annäherungsgeschwindigkeit eine entsprechend geringere Reduzierung der Bewegungsgeschwindigkeit der Greifeinrichtung veranlasst.

Die Erfindung umfasst auch eine Sicherungseinrichtung für eine Handhabungsvorrichtung, insbesondere einen Industrieroboter, mit wenigstens einer Sensoreinrichtung zum Erkennen möglicher Kollisionen und einer Steuereinrichtung zum Betreiben der Sicherheitseinrichtung. Dabei ist es vorgesehen, dass die Greifeinrichtung Greiffinger aufweist, die bei einer Kollision mit dem Objekt in Kollisionsrichtung nachgebend ausgebildet sind. Dadurch wird es ermöglicht, dass ein interaktiver Betrieb zwischen einer Person und einem Industrieroboter möglich ist, bei der der Bediener beispielsweise ein Objekt kurz vor dem Greifen durch den Greifarm verschiebt oder wegnimmt, wobei aufgrund der geringen Entfernung zwischen der Hand des Bedieners und den Greiffingern die Gefahr besteht, dass die Greiffinger die Hand des Bedieners erfassen bzw. verletzen. Aufgrund der sehr hohen Annäherungsgeschwindigkeit zwischen der Hand des Bedieners und den Greiffinger versagen dabei oftmals bekannte Sensorprinzipien bzw. Sicherungsmaßnahmen. Um trotzdem Verletzungen des Bedieners zu vermeiden bzw. zumindest abzumildern, sind die Greiffinger daher in Kollisionsrichtung nachgebend ausgebildet.

In einer weiteren, besonders bevorzugten Ausgestaltung der Erfindung ist es vorgesehen, dass die Greifeinrichtung von einer stoßabsorbierenden Umhüllung umgeben ist, deren Dicke einen Bremsweg des Greifarms bis zum Stillstand angepasst ist.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte Darstellung eines in einem Arbeitsbereich angeordneten Industrieroboters mit einer erfindungsgemäßen Sicherheitseinrichtung und
- Fig. 2: ein Blockschaubild zur Verdeutlichung des erfindungsgemäßen Verfahrens zum Betreiben der Sicherheitseinrichtung.

Gleiche Bauteile bzw. Bauteile mit gleicher Funktion sind in den Figuren mit den gleichen Bezugsziffern versehen.

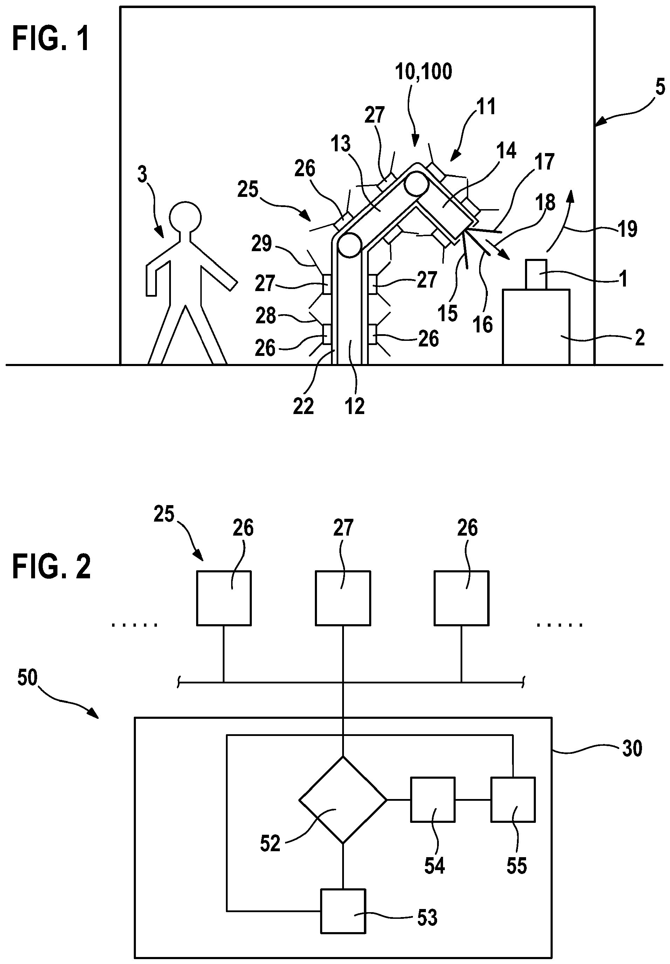

In der Fig. 1 ist stark vereinfacht eine Handhabungsvorrichtung 10 in Form eines Industrieroboters 100 dargestellt. Die Handhabungsvorrichtung 10 bzw. der Industrieroboter 100 weist eine mehrachsige Greifeinrichtung 11 auf. Die Greifeinrichtung 11 umfasst eine Säule 12, an die sich zwei beweglich angeordnete Träger 13, 14 anschließen. Am Ende des einen Trägers 14 sind beispielhaft drei Greiffinger 15 bis 17 angeordnet, mit denen ein in der Fig. 1 symbolisch dargestellter Gegenstand bzw. ein Bauteil 1, das auf einem Tisch 2 angeordnet ist, gegriffen werden kann.

Die Säule 12 bzw. die Träger 13, 14 sind in nicht näher bezeichneten bzw. dargestellten Dreh- bzw. Schwenkachsen gelagert, so dass die Greifvorrichtung 11 bzw. die Greiffinger 15 bis 17 jeden innerhalb eines Arbeitsraums 5 befindlichen Raumpunkt anfahren kann. Der Arbeitsraum 5 bildet somit die Systemgrenze der Greifeinrichtung 11 aus. Dadurch wird es insbesondere ermöglicht, beispielsweise das Bauteil 1 von dem Tisch 2 aufzunehmen und an einen anderen Ort innerhalb des Arbeitsraums 5 zu transportieren, wo beispielsweise eine Montage des Bauteils 1 mit anderen, nicht dargestellten Bauteilen erfolgt.

In der Fig. 1 ist der Fall dargestellt, dass die Greiffinger 15 bis 17 sich dem Bauteil 1 nähern, was durch einen ersten Bahnabschnitt 18 dargestellt ist. Nach dem Greifen des Bauteils 1 wird der angesprochene Punkt innerhalb des Arbeitsraumes 5 angefahren, was durch einen zweiten Bahnabschnitt 19 dargestellt sein soll. Die beiden Bahnabschnitte 18, 19 bilden dabei einen in der Handhabungsvorrichtung 10 abgespeicherten Bewegungsablauf bzw. eine Bewegungsbahn der Greifeinrichtung 11 ab, wobei auf der Bewegungsbahn die Greifeinrichtung 11 bzw. die Greiffinger 15 bis 17 mit unterschiedlichen Geschwindigkeiten bewegt werden können.

Die Handhabungsvorrichtung 10 ist zumindest im Bereich der Säule 12 und der Träger 13, 14 von einer stoßabsorbierenden Umhüllung 22 umgeben, deren Dicke derart angepasst bzw. bemessen ist, dass bei einer möglichen Kollision mit einem Objekt 3, beispielsweise einer Bedienperson, auf der Bewegungsbahn ein Abstoppen der Greifeinrichtung 11 ermöglicht wird, ohne dass es zu Beschädigungen des Objektes 3 kommt.

Ferner umfasst die Handhabungsvorrichtung 10 eine Sensoreinrichtung 25, die beispielhaft eine Vielzahl von einzelnen Sensorelementen 26, 27 mit Erfassungsbereichen 28, 29 aufweist. Die Sensoreinrichtung 25 ist dabei beispielhaft an der Außenseite der Umhüllung 22 angeordnet, derart, dass die Sensorelemente 26, 27 bei einer Bewegung der Greifeinrichtung 11 alle auf der Bewegungsbahn befindlichen Raumpunkte erfassen können.

Als Sensorelemente 26, 27 kommen insbesondere kapazitive Sensorelemente 26, 27 zur Anwendung, die bei einer relativen Annäherung zwischen den Sensorelementen 26, 27 und dem Objekt 3 ein entsprechendes Signal an eine Steuereinrichtung 30 der Handhabungsvorrichtung 10 abgeben. Grundsätzlich sind jedoch unterschiedliche Messprinzipien für die Sensorelemente 26, 27 denkbar. So können beispielsweise auch auf Ultraschall- oder Radarbasis operierende Sensorelemente 26, 27 Verwendung finden. Wesentlich ist lediglich, dass mittels der Sensorelemente 26, 27 ein Objekt 3 innerhalb der Erfassungsbereiche 28, 29 erfasst bzw. entdeckt wird, bevor das Objekt 3 in Kollision bzw. in Kontakt mit der Handhabungsvorrichtung 10 gerät.

Die soweit beschriebenen Sensorelemente 26, 27 bilden zusammen mit der Steuereinrichtung 30 eine Sicherungseinrichtung 50 für die Handhabungsvorrichtung 10 aus. Deren Wirkungsweise wird nunmehr anhand der Fig. 2 näher erläutert: Man erkennt, dass die Sensorelemente 26, 27 signalleitend mit der Steuereinrichtung 30 verbunden sind. In der Steuereinrichtung 30 ist ein Antikollisionsprogramm bzw. ein entsprechender Algorithmus abgespeichert, der die von den Sensorelementen 26, 27 vorzugsweise laufend empfangenen Signale über das Vorhandensein eines Objekts 3 innerhalb des Erfassungsbereichs 28, 29 verarbeiten. So wird in einem ersten Programmschritt 52 abgefragt, ob von den Sensorelementen 26, 27 ein Signal über ein im Erfassungsbereich 28, 29 befindliches Objekt 3 gemeldet wird. Ist dies nicht der Fall, wird entsprechend des zweiten Programmschritts 53 ein bestimmter Bewegungsablauf bzw. eine bestimmte Bewegungsbahn 20 der Greifeinrichtung 11 durchgeführt, d.h., dass die Handhabungsvorrichtung 10 in ihrem Normalbetrieb arbeitet, in der die Teile 1 in gewünschter Art und Weise gehandhabt werden.

Meldet hingegeben eines der Sensorelemente 26, 27 in dem ersten Programmschritt 52 ein Objekt 3 innerhalb des Erfassungsbereichs 28, 29, so wird ggf. in einem weiteren Programmschritt 54 das entsprechende Sensorelement 26, 27 lokalisiert. Da die Sensorelemente 26, 27 vorzugsweise in gleich langen Zeiträumen entsprechende Signale erzeugen, kann darüber hinaus beispielsweise aus den jeweiligen Signalstärken auf eine entsprechende Annäherungsgeschwindigkeit zwischen dem Objekt 3 und dem Sensorelement 26, 27 bzw. der Handhabungsvorrichtung 10 geschlossen werden. Ferner ist es auch möglich, aus den erfassten bzw. übermittelten Signalen der Sensorelemente 26, 27 zu ermitteln, ob eine potentielle Kollision des Objekts 3 mit der Greifeinrichtung 11 im Bereich der Bewegungsbahn 20 stattfindet oder nicht.

Besteht die Gefahr einer potenziellen Kollision, so wird in einem nächsten Programmschritt 55 eine gesteuerte Reduktion der Bewegungsgeschwindigkeit der Greifeinrichtung 11 derart vorgenommen, dass, in Abhängigkeit von dem aktuellen Abstand zwischen dem Objekt 3 und der Bewegungsbahn 20 bzw. der Annäherungsgeschwindigkeit zwischen dem Objekt 3 zur Bewegungsbahn 20 im potenziellen Auftreffpunkt eine Reduktion der Geschwindigkeit ggf. bis auf den Wert Null stattfindet. Wesentlich dabei ist, dass es sich dabei um eine gesteuerte, das heißt kontrollierte Reduktion der Bewegungsgeschwindigkeit der Greifeinrichtung 11 handelt, d.h., dass die Steuereinrichtung 30 in jedem Zeitpunkt den genauen Ort der Greifeinrichtung 11 bzw. der Greiffinger 15 bis 17 erfassen kann.

Besonders bevorzugt ist es vorgesehen, dass die Änderung bzw. Reduzierung der Bewegungsgeschwindigkeit der Greifeinrichtung 11 in Abhängigkeit von dem jeweiligen Abstand zwischen dem Objekt 3 und der Handhabungsvorrichtung 10 bzw. der entsprechenden Annäherungsgeschwindigkeit stattfindet. Das bedeutet, dass für den Fall, dass sich der Abstand den zwischen dem Objekt 3 und der Handhabungsvorrichtung 10 auf seiner Bewegungsbahn wieder vergrößert, die Bewegungsgeschwindigkeit der Greifeinrichtung 11 wieder erhöht wird, gegebenenfalls bis zu einer Soll-Geschwindigkeit, die dem Normalbetrieb der Greifeinrichtung 11 entspricht. Es findet somit eine Geschwindigkeits- bzw. Leistungsoptimierung der Handhabungsvorrichtung 10 statt, sobald sich ein Objekt 3 in möglicher Kollisionsgefahr mit der Handhabungsvorrichtung 10 befindet.

Es kann jedoch auch vorgesehen sein, dass beim Erfassen eines Objekts durch eines der Sensorelemente 26, 27 eine gesteuerte Reduktion der Bewegungsgeschwindigkeit der Greifeinrichtung 11 bis zum Stillstand erfolgt. Sobald kein Objekt mehr erfast wird, wird die Bewegungsgeschwindigkeit wieder auf ihren ursprünglichen Wert erhöht.

Ergänzend wird erwähnt, dass die soweit beschriebene Sicherungseinrichtung 50 bzw. die Handhabungsvorrichtung 10 in vielfältiger Art und Weise modifiziert werden kann, ohne vom Erfindungsgedanken abzuweichen. So ist es insbesondere sinnvoll, bei den Sensorelementen 26, 27 Sensorelemente zu verwenden, die mit unterschiedlichen Messprinzipien (z.B. kapazitiv arbeitende Sensorelemente 27 und auf Ultraschallbasis arbeitende Sensorelemente 27) arbeiten. Weiterhin ist es zur Erhöhung der Betriebssicherheit denkbar bzw. vorteilhaft, wenn mindestens jeweils zwei Sensorelemente 26, 27 einen identischen Erfassungsbereich 28, 29 aufweisen, derart, dass mittels des entsprechenden Erfassungsbereichs 28, 29 der gleiche Bereich im Arbeitsraum 5 überwacht wird. Erfindungsgemäß ist es vorgesehen, dass die Greiffinger 15 bis 17 am Träger 14 kraftschlüssig angeordnet bzw. befestigt sind, derart, dass für den Fall, dass zum Beispiel ein Bedienter das Bauteil 1 greift, die Greiffinger 15 bis 17 zwar gegebenenfalls in Kontakt mit der Hand des Bedieners geraten, diese jedoch in Kollisionsrichtung nachgebend ausgebildet sind, so dass zumindest schwerwiegende Verletzungen des Bedieners ausgeschlossen werden können.

## Patentansprüche

1. Verfahren zum Betreiben einer Sicherungseinrichtung (50) für eine Handhabungsvorrichtung (10), insbesondere einen Industrieroboter (100), mit einer beweglichen Greifeinrichtung (11) mit Greiffingern (15 bis 17),
wobei die Greiffinger (15 bis 17) an einem Träger (14) kraftschlüssig angeordnet bzw. befestigt sind
sowie mit zumindest einer die Greifeinrichtung (11) zumindest weitgehend umgebenden Sensoreinrichtung (25) zum Erkennen zumindest möglicher Kollisionen mit im Bewegungsweg (18, 19) der Greifeinrichtung (11) befindlichen Objekten (3), wobei beim Erkennen einer Kollisionsgefahr ein Signal an eine Steuereinrichtung (30) erzeugt wird, die einen geänderten Bewegungsablauf der Greifeinrichtung (11) auf ihrer Bewegungsbahn (18, 19) zur Folge hat, wobei der geänderte Bewegungsablauf eine gesteuerte Reduzierung der Bewegungsgeschwindigkeit der Greifeinrichtung (11) ist,
wobei bei Kollisionen mit im Bewegungsweg (18, 19) der Greifeinrichtung (11) befindlichen Objekten (3) die Greiffinger (15 bis 17) in Kollisionsrichtung nachgeben, so dass zumindest schwerwiegende Verletzungen des Objekts (3) ausgeschlossen werden können.

2. Verfahren nach Anspruch 1,
**dadurch gekennzeichnet,**
**dass** die gesteuerte Reduktion der Bewegungsgeschwindigkeit bis auf den Stillstand der Greifeinrichtung (11) erfolgt.

3. Verfahren nach Anspruch 1 oder 2,
**dadurch gekennzeichnet,**
**dass** die Reduktion der Bewegungsgeschwindigkeit in Abhängigkeit derjeweils erfassten Entfernung des Objekts (3) von der Bewegungsbahn (18, 19) der Greifeinrichtung (11) erfolgt.

4. Verfahren nach Anspruch 3,
**dadurch gekennzeichnet,**
**dass** nach einer Reduktion der Bewegungsgeschwindigkeit die Bewegungsgeschwindigkeit der erfassten Entfernung vom Objekt (3) flexibel angepasst wird, insbesondere dass die Bewegungsgeschwindigkeit wieder bis auf eine ursprüngliche Soll-Bewegungsgeschwindigkeit erhöht wird.

5. Verfahren nach einem der Ansprüche 1 bis 4,
**dadurch gekennzeichnet,**
**dass** Signale von mehreren Sensorelementen (26, 27) verarbeitet werden, wobei zumindest zwei der Sensorelemente (26, 27) denselben Erfassungsbereich (28, 29) aufweisen.

6. Verfahren nach einem der Ansprüche 1 bis 5,
**dadurch gekennzeichnet,**
**dass** Signale von mehreren Sensorelementen (26, 27) verarbeitet werden, wobei zumindest zwei der Sensorelemente (26, 27) mit unterschiedlichen Messprinzipien arbeiten.

7. Verfahren nach einem der Ansprüche 1 bis 6,
**dadurch gekennzeichnet,**
**dass** die Änderung der Bewegungsgeschwindigkeit in Abhängigkeit der Annäherungsgeschwindigkeit zwischen der Greifeinrichtung (11) und dem Objekt (3) gesteuert wird.

8. Handhabungsvorrichtung (10), insbesondere einen Industrieroboter (100), mit wenigstens einer Sensoreinrichtung (25) zum Erkennen möglicher Kollisionen mit im Bewegungsweg (18, 19) einer Greifeinrichtung (11) befindlichen Objekten (3), mit einer Sicherungseinrichtung (50) und mit einer Steuereinrichtung (30) zum Betreiben der Sicherungseinrichtung (50) nach einen Verfahren nach einem der Ansprüche 1 bis 7.

9. Handhabungsvorrichtung (10) nach Anspruch 8,
**dadurch gekennzeichnet,**
**dass** die Greifeinrichtung (11) von einer stoßabsorbierenden Umhüllung (22) umgeben ist, deren Dicke einem Bremsweg der Greifeinrichtung (11) bis zu deren Stillstand angepasst ist.

## Claims

1. Method for operating a safety apparatus (50) for a handling device (10), in particular an industrial robot (100),
having a movable gripper device (11) with gripper fingers (15 to 17), wherein the gripper fingers (15 to 17) are arranged on and fixed to a carrier (14) by a force fit, and having at least one sensor device (25) at least largely surrounding the gripper device (11) for detecting at least possible collisions with objects (3) located in the movement path (18, 19) of the gripper device (11), wherein, when a risk of a collision is detected, a signal to a control apparatus (30) is generated, which results in a modified movement sequence of the gripper device (11) on its movement path (18, 19), wherein the modified movement sequence is a controlled reduction of the speed of movement of the gripper device (11),
wherein, in the event of collisions with objects (3) located in the movement path (18, 19) of the gripper device (11), the gripper fingers (15 to 17) give way in the collision direction, so that at least serious injury to the object (3) can be ruled out.

2. Method according to Claim 1,
**characterized in that**
the controlled reduction of the speed of movement is carried out as far as the stoppage of the gripper device (11) .

3. Method according to Claim 1 or 2,
**characterized in that**
the reduction in the speed of movement is carried out as a function of the respectively detected distance of the object (3) from the movement path (18, 19) of the gripper device (11).

4. Method according to Claim 3,
**characterized in that**
following a reduction in the speed of movement, the speed of movement is matched flexibly to the detected distance from the object (3), in particular **in that** the speed of movement is increased again up to an original target speed of movement.

5. Method according to one of Claims 1 to 4,
**characterized in that**
the signals from a plurality of sensor elements (26, 27) are processed, wherein at least two of the sensor elements (26, 27) have the same detection region (28, 29) .

6. Method according to one of Claims 1 to 5,
**characterized in that**
the signals from a plurality of sensor elements (26, 27) are processed, wherein at least two of the sensor elements (26, 27) operate with different measurement principles.

7. Method according to one of Claims 1 to 6,
**characterized in that**
the change in the speed of movement is controlled as a function of the speed of approach between the gripper device (11) and the object (3).

8. Handling device (10), in particular an industrial robot (100), having at least one sensor device (25) for detecting possible collisions with objects (3) located in the movement path (18, 19) of a gripper device (11), having a safety apparatus (50) and having a control apparatus (30) for operating the safety apparatus (50) according to a method according to one of Claims 1 to 7.

9. Handling device (10) according to Claim 8,
**characterized in that**
the gripper device (11) is surrounded by an impact-absorbing enclosure (22), the thickness of which is matched to a braking travel of the gripper device (11) down to its standstill.

## Revendications

1. Procédé de fonctionnement d'un dispositif de sécurité (50) destiné à un dispositif de manipulation (10), notamment un robot industriel (100), comportant un moyen de préhension mobile (11) pourvu de doigts de préhension (15 à 17), les doigts de préhension (15 à 17) étant disposés ou fixés sur un support (14) par une liaison en force, ainsi qu'au moins un moyen de détection (25) qui entoure au moins dans une large mesure le moyen de préhension (11) et qui est destiné à détecter des collisions au moins éventuelles avec des objets (3) se trouvant sur le chemin de déplacement (18, 19) du moyen de préhension (11), lors de la détection d'un risque de collision un signal étant généré à destination d'un moyen de commande (30) qui modifie en conséquence le déplacement du moyen de préhension (11) sur sa trajectoire de déplacement (18, 19),
le déplacement modifié consistant en une réduction commandée de la vitesse de déplacement du moyen de préhension (11),
en cas de collision avec des objets (3) se trouvant sur le chemin de déplacement (18, 19) du moyen de préhension (11), les doigts de préhension (15 à 17) fléchissant dans la direction de collision de façon à pouvoir exclure des endommagements au moins sévères de l'objet (3).

2. Procédé selon la revendication 1,
**caractérisé en ce que**
la réduction commandée de la vitesse de déplacement est effectuée jusqu'à ce que le moyen de préhension (11) s'arrête.

3. Procédé selon la revendication 1 ou 2,
**caractérisé en ce que**
la réduction de la vitesse de déplacement est effectuée en fonction de la distance à chaque fois détectée de l'objet (3) par rapport à la trajectoire de déplacement (18, 19) du moyen de préhension (11).

4. Procédé selon la revendication 3,
**caractérisé en ce que**
après réduction de la vitesse de déplacement, la vitesse de déplacement est adaptée de manière flexible à la distance détectée par rapport à l'objet (3), en particulier la vitesse de déplacement est à nouveau augmentée jusqu'à une vitesse de déplacement cible d'origine.

5. Procédé selon l'une des revendications 1 à 4,
**caractérisé en ce que**
des signaux provenant de plusieurs éléments de détection (26, 27) sont traités, au moins deux des éléments de détection (26, 27) ayant la même gamme de détection (28, 29).

6. Procédé selon l'une des revendications 1 à 5,
**caractérisé en ce que**
des signaux provenant de plusieurs éléments de détection (26, 27) sont traités, au moins deux des éléments de détection (26, 27) fonctionnant avec des principes de mesure différents.

7. Procédé selon l'une des revendications 1 à 6,
**caractérisé en ce que**
la modification de la vitesse de déplacement est commandée en fonction de la vitesse d'approche entre le moyen de préhension (11) et l'objet (3).

8. Dispositif de manipulation (10), en particulier robot industriel (100), comportant au moins un moyen de détection (25) destiné à détecter d'éventuelles collisions avec des objets (3) se trouvant sur le chemin de déplacement (18, 19) d'un moyen de préhension (11), un moyen de sécurité (50) et un moyen de commande (30) destiné à actionner le moyen de sécurité (50) selon un procédé selon l'une des revendications 1 à 7.

9. Dispositif de manipulation (10) selon la revendication 8,
**caractérisé en ce que**
le moyen de préhension (11) est entouré d'un revêtement amortisseur de choc (22) dont l'épaisseur est adaptée à une distance de freinage du moyen de préhension (11) jusqu'à l'arrêt de celui-ci.
